# EUROPEAN PATENT APPLICATION

(11) **EP 1 936 496 A1**
(43) Date of publication of application: **25.06.2008**
(21) Application number: 07117140.9
(22) Date of filing: 25.09.2007
(51) Int. Cl.: G06F 9/44

(54) **Module classification and searching for industrial control systems**

(30) Priority: 29.09.2006 US 536791
(71) Applicant: Rockwell Automation Technologies, Inc., Mayfield Heights, OH 44124-6188 (US)
(72) Inventor: Hall, Kenwood H., Hudson, OH 44236 (US); Hood, Gavan W., Upper Lockyer, Queensland 4352 (AU); Chand, Sujeet, Brookfield, WI 53045 (US); D´Mura, Paul R., Glendale, AZ 85310 (US); Kalan, Michael D., Highland Heights, OH 44143 (US); Plache, Kenneth S., Scottsdale, AZ 85255 (US)
(74) Representative: Englaender, Klaus

(57) **Abstract**

A search component for an industrial automation system is provided. The search component includes one or more modules that employ resources and logic to expose functionality of the modules while providing generic interfaces to external components of the modules. A classification component assigns attributes to the modules to facilitate a search of the modules.

## Description

### TECHNICAL FIELD

The subject invention relates generally to industrial control systems and more particularly to a module structure that exposes functionality of a component between elements of a control system, where classification and searching components enable efficient tracking, management, and design of applications associated with the module structure.

### BACKGROUND

Industrial controllers historically have operated in factory networks where a plurality of controllers and associated I/O modules communicate. These lower level control elements are often in communication with higher level computing systems or servers that aggregate data from the controllers and help to manage day-to-day activities of an enterprise. As systems have become more complex however, communications and functional cooperation between components has become a challenge. For instance, when users purchase multiple products from one or more vendors there is often limited interoperability and consistency between such products. Software and control engineers must then learn their unique product and how the components interact with each other. Limited product and component consistency suggest that techniques engineers learn in one product do not necessarily carry over to other implementations. In general, control and application systems use different interfaces that make mapping difficult; meanwhile qualified personnel that understand both hardware and software environments are in short supply and command high salaries.

Often times, integration of products (production and automation systems in particular) is too complex and difficult to manage. Process and control engineers cannot code and configure their respective components of a solution without concern for other system components. In addition, system startup metrics are generally not sufficient to supply clear and measurable information for the user/integrator. In one example, a user specifies a line production system with both control and software system components. The development (customization) and integration cost is significant allowing for long ramp-up and integration due to the complexity of connecting systems and uncertainty of how the system will perform. This has a significant impact beyond the cost of the control system as line commissioning and ramp-up are delayed during control system integration. A more predictable process and less complex system integration capability will reduce these costs.

Another problem with current control solutions is that users currently focus on implementation and glue logic rather than the production solution at hand. The underlying technical details have become a primary worry where engineers from multiple environments do not focus on process information (application level concerns) and values exchanged, rather they more often focus on the "how" not the "what." For instance, a user may decide to automate a manual section of their plant. The design may start at a high level but soon becomes a series of discussions regarding nonfunctional requirements e.g., DCOM, TCP, transaction rates, and the like. While these nonfunctional requirements are important, the design of functional requirements is where the true value is to the designer or end user. Thus, the user would prefer to focus on functional requirements (equipment control, product flow control, and so forth) providing direct improvements in value rather than dealing with superfluous technology issues.

In another case, system design does not sufficiently enable trade-offs between overhead burden (memory footprint, CPU cycles, and so forth) and application coupling. For instance, processing load should be better distributed across the system in accordance with system capabilities. Thus, if one part of the system is shut down, alternative processing capability should be in place to allow production to continue. For example, a user initially designs and installs a control system suiting their immediate needs. Incremental changes are then applied to controllers and often new interface functions are added to the human machine interface (HMI) for such controllers. Current solutions however do not facilitate a smooth and uncomplicated transition for the respective changes. Multiple technologies underneath many vendors' products complicate configuration and management of systems. This is also aggravated when third party systems are involved. Such complexity hinders the system's capacity to provide higher-level information and reduces its ability to easily configure such systems.

### SUMMARY

The following presents a simplified summary in order to provide a basic understanding of some aspects described herein. This summary is not an extensive overview nor is intended to identify key/critical elements or to delineate the scope of the various aspects described herein. Its sole purpose is to present some concepts in a simplified form as a prelude to the more detailed description that is presented later.

Search and classification methods are provided that enable managing logical modules for control systems in an automated and efficient manner. A logical module facilitates access to a broad range of control system or enterprise functionality while hiding complex details of interfacing to such functionality. In one aspect, a module provides an association of logic with one or more resources, where the logic controls the state of the resources and the resources define components or states of a system. Modules can be classified according to a plurality of attributes that are associated with a respective module. This also includes the ability to classify modules according to a type, where the attributes or the type can be employed to facilitate module searches which aid developers to locate a related grouping or subset of modules.

The module subset can then be utilized in a variety of applications such as to construct other applications from the retrieved subset, monitor various aspects of an enterprise from the subset, and perform substantially any search operation that facilitates management of a given library or collection of modules. Some examples of module types that can be employed for classification include configuration modules that include definitions and configurations for resources, control modules that facilitate control of resources, and coordination modules that facilitate coordination of resources. Attributes can include resource focus types, activity types, host application types, industry domain types, module properties, message types, configuration types, interface similarities, and so forth.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

Fig. 1 is a schematic block diagram illustrating module, classification and search components for an industrial automation system.

Fig. 2 is a diagram illustrating module attributes.

Fig. 3 is a diagram illustrating an example module group display.

Figs. 4-6 illustrate communications functionality that supports module classification and searching.

Fig. 10 is a flow diagram illustrating a process for module classification and searching.

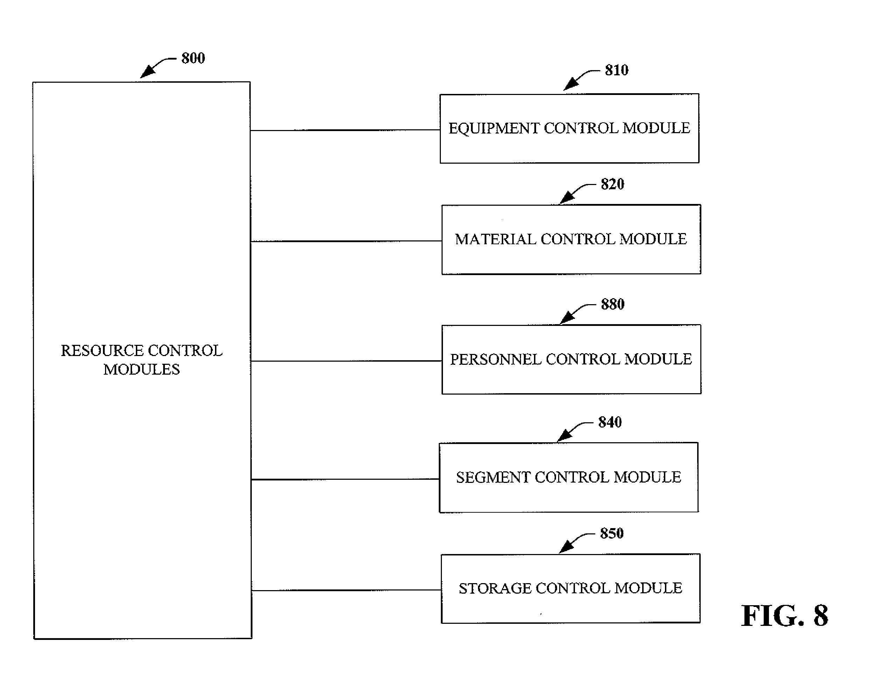

Fig. 8 is a diagram illustrating example resource control modules.

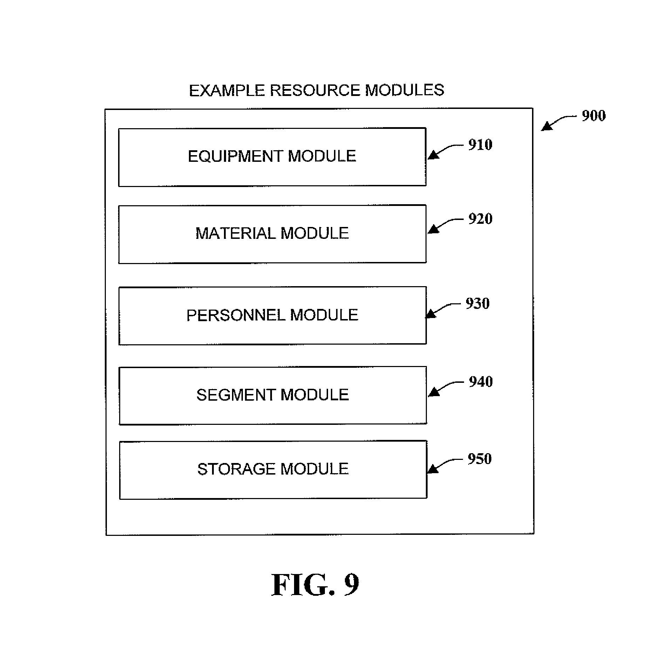

Fig. 9 is a diagram illustrating a resource module.

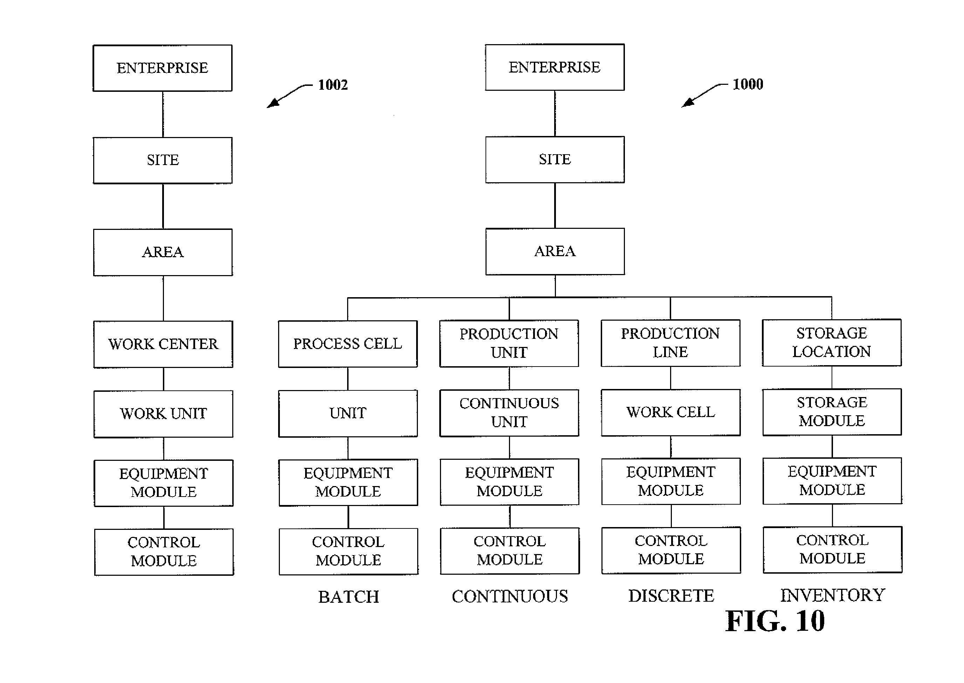

Figs. 10-13 illustrate a common data model that can be employed with modules in an industrial automation system.

### DETAILED DESCRIPTION

Systems and methods are provided to facilitate interaction with an industrial control system while mitigating interface requirements and integration nuances of diverse components of the system. In one aspect, a search component for an industrial automation system is provided. The search component includes one or more modules that employ resources and logic to expose functionality of the modules while providing generic interfaces to external components of the modules. A classification component assigns attributes to the modules to facilitate a search of the modules. The system can include a search engine that employs the attributes to determine a subset for the modules, where the attributes can include a primary resource focus type, an activity type, a host application type, an industry domain type, or other types. Modules can be searched via services, interfaces, operations, or associated metadata that expose functionality, keywords, or other search criteria.

It is noted that as used in this application, terms such as "component," "resource," "module," "model, " and the like are intended to refer to a computer-related entity, either hardware, a combination of hardware and software, software, or software in execution as applied to an automation system for industrial control. For example, a component may be, but is not limited to being, a process running on a processor, a processor, an object, an executable, a thread of execution, a program and a computer. By way of illustration, both an application running on a server and the server can be components. One or more components may reside within a process and/or thread of execution and a component may be localized on one computer and/or distributed between two or more computers, industrial controllers, and/or modules communicating therewith.

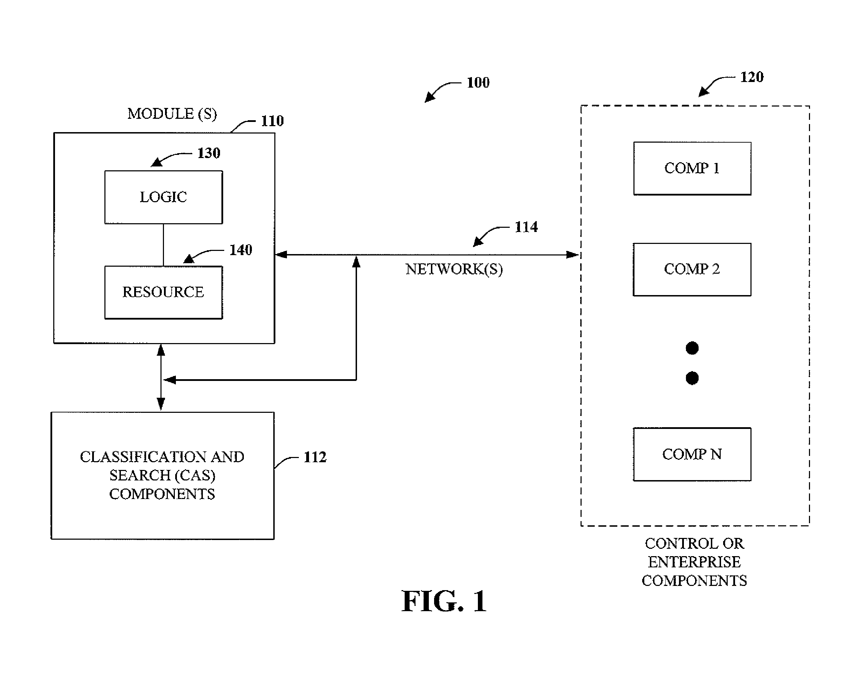

Referring initially to Fig. 1, a system 100 illustrates a module component 110 (hereinafter referred to as a module) interacting with a classification and search component (CAS) 112 for an industrial automation system. The module 110 is employed to define, interface, and execute functionality of one or more industrial control system components 120 which are described in more detail below. As illustrated, the modules 110 can be accessed across a network 114 from the control components 120. As shown, the modules 110 are operable with the CAS component 112 to facilitate classifying or categorizing the modules and them searching for the modules across the network 114. Modules 110 can be interfaced by users via standard interface methods such as via a graphical user interface (GUI) and/or can be configured to interact with a plurality of other modules 110, CAS 112, and/or control components 120.

In general, the module 110 is an association of logic 130 with one or more resources 140. The logic 130 includes program code that can alter the state of a resource 140 for example, ladder code, function chart, script, JAVA, C code, and so forth. The resources 140 are those components or elements that perform an activity in a system including equipment and personnel that perform work in a system. Other examples of types of resources 140 include Equipment, Material, Personnel, Segments and Storage. Personnel and equipment (machines) can perform activities in a system. Resources that can perform work can be classified as active resources (*e.g*., CNC machine, Injection molding machine), whereas other equipment resources can be considered passive resources (*e.g*., sensor, material). In general, the modules 110 hide the user from internal interfaces, messages, and logic specific to the resources yet provide standard or generic interfaces to external systems or between components 120.

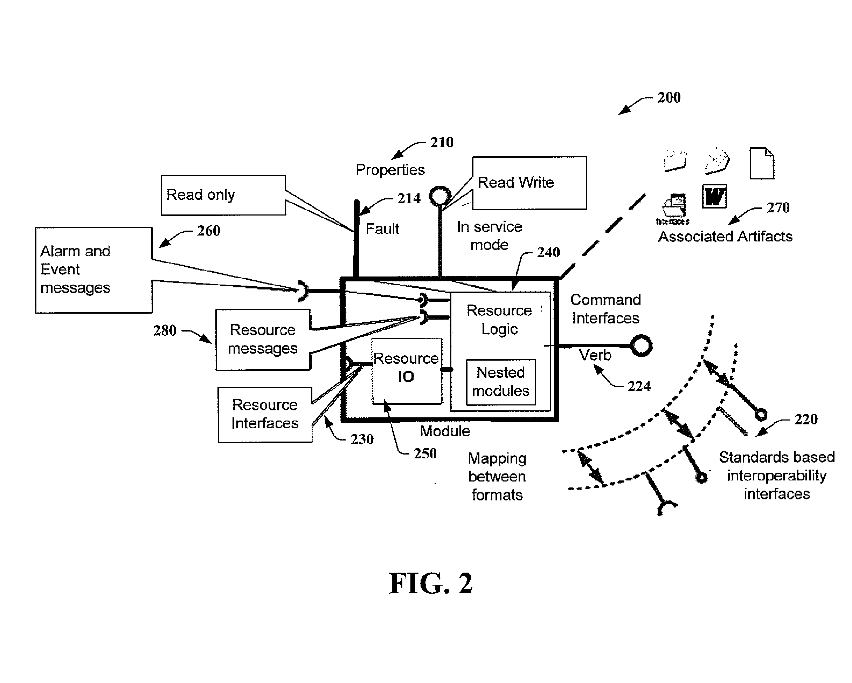

In one aspect, search and classification is provided by the CAS 112 that enables managing the modules 110 in an automated and efficient manner. The modules 110 can be classified according to a plurality of attributes that are associated with a respective module and described in more detail below with respect to Fig. 2. This also includes the ability to classify modules 110 according to a type (See Figs. 8 and 9 for examples), where the attributes or the type can be employed to facilitate module searches by the CAS 112 which aid developers to locate a related grouping or subset of modules. It is noted that module searches can be performed by substantially any type of search tool including search engines or computer search utilities. Such search utilities can be applied to a library of modules 110 or can be employed to scan the components 120 for modules. When the CAS 112 performs a search of the modules 110, a module subset is determined from the search and can then be utilized in a variety of applications such as to construct other applications from the retrieved subset, monitor various aspects of an enterprise from the subset, and perform substantially any search operation that facilitates management of a given library or collection of modules.

To facilitate searching, at least three types of modules 110 are defined. These include configuration modules that provide management definition and configuration of resources including personnel, segments, equipment, segments, storage, and so forth. Another type of module 110 includes control modules which provide control of one or more resources. Still yet another type of module 110 includes coordination modules that extend resource control modules to enable coordination of resources between modules. Resource coordination modules can represent more complex activities than resource control modules which are described in more detail below with respect to Figs. 8 and 9.

In another aspect, modules can be classified via the CAS 112 using categories and sub categories. This feature relieves the need to explicitly classify modules along resource boundaries and it opens up the classification to allow a broader set of module attributes and behaviors. For example, an activity can be considered a category name, where an entry quality considered a sub category. More detail on the physical structure of modules can be provided by common data model class definitions which are described in more detail with respect to Figs. 10-13. In one specific example, a module may be associated with an event producer module class that specifies certain attributes and behaviors for producing such events.

As can be appreciated, modules 110 can be classified by the CAS 112 into various categories or subcategories that allow easier and more flexible management of the modules. Some examples include classifying modules by: By primary resource focus that includes Equipment, Material, Segment, Personnel, Storage, and so forth; by activity including Work Order, Track and Trace, Equipment Control, Quality, Performance, Route processing, Recipe processing, data roll-up and so forth; by host application including Process Designer, Shop Operations, RSBatch, RSView, RSLogix, and other applications; by industry domain including Discrete, Batch, Inventory, continuous, and so forth. These classifications are in addition to other attributes such as author, deployment information (where and when used by whom), associated artifacts associated with the module, module documentation and so forth.

As can be appreciated, the module 110 can be associated with a number of categories / sub categories enabling applications to present the modules in the appropriate context to users or other application components. For example, this would enable a visual demonstration to be presented with the same color coding of modules retrieved in a search. Module classifications allow applications and the platform (e.g., Library manager) to arrange and present modules in groups and to visually distinguish between different types of modules. This enables applications, processes, users to search and filter modules repeatedly during configuration and execution. This also allows users to search repeatedly to refine selections (to show modules of a specific type or author) and expand selections (other objects made by designer, deployed to customer X with this module and so forth).

Before proceeding, it is noted that the components 120 can include various computer or network components such as servers, clients, programmable logic controllers (PLCs), communications modules, mobile computers, wireless components, control components and so forth which are capable of interacting across the network 114. Similarly, the term PLC as used herein can include functionality that can be shared across multiple components, systems, and or networks 114. For example, one or more PLCs can communicate and cooperate with various network devices across the network 114. This can include substantially any type of control, communications module, computer, I/O device, sensor, Human Machine Interface (HMI)) that communicate *via* the network 114 which includes control, automation, and/or public networks. The PLC can also communicate to and control various other devices such as Input/Output modules including Analog, Digital, Programmed/Intelligent I/O modules, other programmable controllers, communications modules, sensors, output devices, and the like.

The network 114 can include public networks such as the Internet, Intranets, and automation networks such as Control and Information Protocol (CIP) networks including DeviceNet and ControlNet. Other networks include Ethernet, DH/DH+, Remote I/O, Fieldbus, Modbus, Profibus, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

Referring now to Fig. 2, module attributes 200 are illustrated. The attributes 200 depicted in Fig. 2 include a common (or exemplary) representation that can be modules from modules. Generally, a set of standard attributes can be determined that are common to all modules. Similarly, for other types of modules described below, additional standard attributes can be defined. An example of a property 210 available on modules includes attributes such as Fault and Status at 214. Active resource modules (*e.g*., equipment and personnel) can support additional properties 210 such as available / unavailable.

Attributes presented below are represented associations from the module to objects which may be internal in a common data model (See. Figs. 8-11) or elsewhere (*e.g.,* CAD Files). At 220, standard public interfaces can be provided. These interfaces 220 publish verbs 224 that are available to external systems and are documented activities that hide the complexity of the underlying code used to implement the interface. Interfaces 220 can be considered into at least two common usage scenarios. For example, interfaces 220 can be used as access points that can be used to hook in real time diagnostics, security and so forth.

Public verbs 224 initiate an action within the module. The activity is described to clients of the interface 220. The implementation is considered private and is not presented to clients - for example, Open, Stop, Abort, Shut, and so forth. A data value property 210 provides public access to information that is used by the module during its operation and can be provided by request values and/or internal values (or an equivalent). The association of logic to transfer request values to internal values and vice versa are referred to as get and set logic for the value. It is noted that in a controller, if there is not a set routine to transfer request values to internal values, the internal value can overwrite the request value on the next scan providing read only capability.

In general, the properties 210 can be considered in at least two classifications. States have special significance for production systems and can have a specific set of values that can be represented by range or enumeration. A state can represent the current status of the primary resource being encapsulated by the module *e.g*., Percent open, Mode, Service (in, out), and so forth, Information that is used by the module during its operation includes access to data that is provided by interfaces 220. *e*.*g*., Conversion Map, Name, Description, expiry date, personnel contact information. Some properties 210 can be common to all instances of resource modules (*e*.*g*., scanned copy of resource specification documents), whereas other properties 210 are specific to each module instance (*e*.*g*., Status, percent open).

At 230, internal resource interfaces include interfaces from logic 240 in the module to the resource being managed at 250, where the logic includes code and/or configuration that processes a command and/or updates state and data properties. In some cases, this can be hardware such as I/O interfaces, or in other cases it is to subordinate resource control modules that have direct interfaces. Some examples include I/O mapping, material management logic routines, and so forth. These interfaces 230 are internal to the module enabling the modules public interfaces 220 and properties 210 to be the boundary to other system components. Modules that wrap different resources but support the same public properties/interfaces can be exchanged without disrupting interfaces to other components. Generally, I/O mapping and system messaging interfaces are exposed during deployment bind processes. When bound, external interfaces 220 to runtime systems may then consider these interfaces as internal.

At 260, alarm and event messages can be provided which include messages that exposed as runtime messages visible to external systems during the execution of the module. This includes alarms and events explicitly coded by the developer and system messages promoted to be visible by external systems. At 270, one or more artifacts include information that document the operation and structure of the resource such as for example, wiring diagrams, warranties, payroll, parts supplier information, and so forth. Visualization aspects include associated graphics that present the resource state and properties to applications interacting with the resource. For example: faceplates, icons, state overlays, edit dialogs, help files. At 280, system messages allow modules to listen for and publish data model messages to external components. Inbound messages are typically used to manage modules (configure, initialize, propagate properties, and so forth) and publish messages on module activity (resource state, data model messages, and so forth).

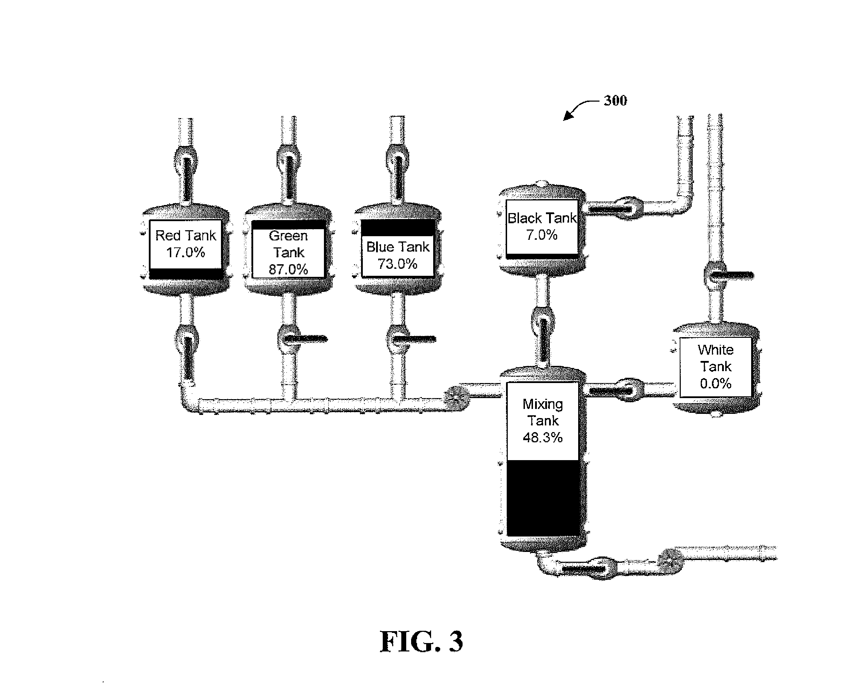

Fig. 3 illustrates an example group module display 300 that can be generated from the classification and searching aspects described above. As noted above, the classification and search aspects can enable various applications. In one example, users may want to configure group displays 300 to view several modules that have one or more aspects in common. The classification and search schemes described herein can be employed to find common elements across a module subset and to enable other applications such as the viewing display 300. In this case, searching mechanisms to those described previously can be used to generate group displays in either such as via a human machine interface (HMI) authoring tool at design time or by an HMI rendering engine at runtime. Some example search/build queries include:

Show all modules that support an equipment control interface contained in Reactor_1; or Show all modules that support a material handling interface contained in Reactor_1; or Show all modules that support an equipment control interface in Area_4 that are In Alarm. As can be appreciated, a plurality of such queries can be generated. If used at design time, these searches on the interfaces supported by modules or the location of the module in an organizational hierarchy or library can be used as a jump start for the user to create custom group displays such as shown at 300. If these queries are built-in to displays and executed at runtime, then this provides a dynamic mechanism to create group displays on the fly. This is particularly powerful when the queries include dynamic status values such as "Show all modules that support the equipment control interface in Area_4 that are In Alarm." However, since these queries return varying amounts of data (i.e., the result could be one module or hundreds of modules), an HMI authoring tool can be employed to support various layout and organization options for the user to manage the dynamic nature of the data.

Filtering options can also be provided to limit a given subset of modules returned from a search. In addition to building displays, new applications can be formed by query a subset of modules, and then linking such modules for future reference. For example, modules that have event or alarm capabilities could be combined to show status for events and alarms across an organization or across portions of the organization. In another case, a subsequent control system design could be started from a collection of modules that were queried and retrieved from a given system.

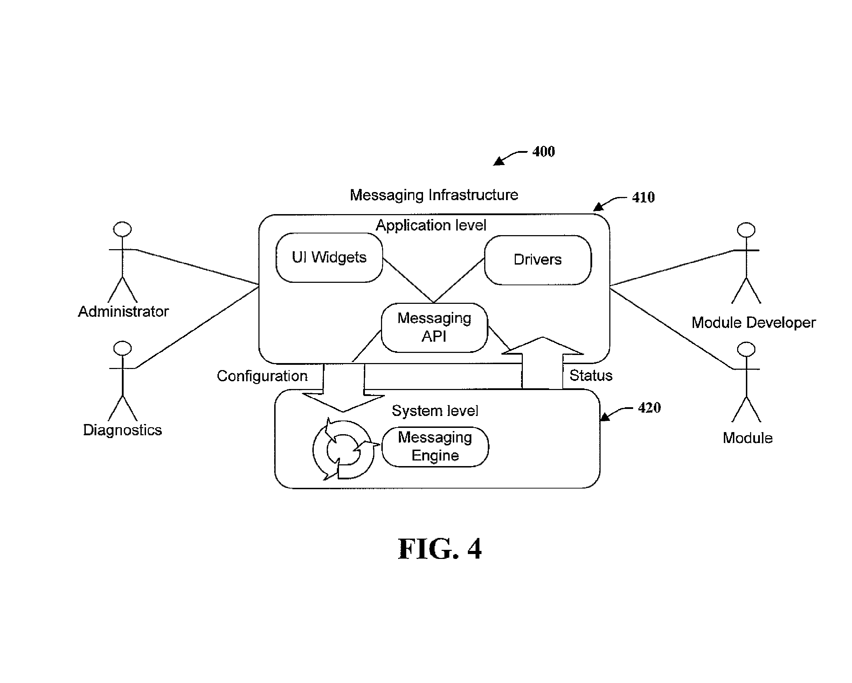

Figs. 4-6 illustrate an example messaging architecture that can be employed with the classification and searching processes described above. In general, there are at least two levels of messaging infrastructure. Referring to Fig. 4 an example infrastructure 400 is illustrated, where application level components are shown at 410 and system level components are shown at 420. The application level components 410 provide programmatic "driver", "messaging API" and user interfaces to the messaging infrastructure for software and automation control modules. These components 410 can be provided in platform toolkits that enable messaging capability for applications. System level components 420 provide the messaging infrastructure to communicate information and data between the modules and run as part of an automation platform. System level components 420 are configured via published system level interfaces. These interfaces executed by application level components which in turn expose application level API's and components to users such as engineers and administrators.

The Application level components 410 can assume the system level components 420 are active and implement functionality to ensure the system is operational. For example, changes to system configuration and messaging scenario, service and message level interactions can be tested ahead of deployment to the runtime system and rolled back if deployed functionality is problematic. Changes can be deployed to the system in different ways. When a module is deployed, the service and associated operations can be resolved against the host environment. Messaging parameters may be configured at any time during the development lifecycle for a module or system.

A module developer may assign messaging attributes (publication rate, port and so forth) which may be extended, optimized or overridden during system test by the test team. Similarly these values may be updated again by administrators and diagnostics personnel. The messaging infrastructure 400 provides consistent interfaces to both manufacturing software and process control engineers and administrators. The differences in these operating environments are managed by application level drivers, API's and other components that can be matched to the user roles in these environments.

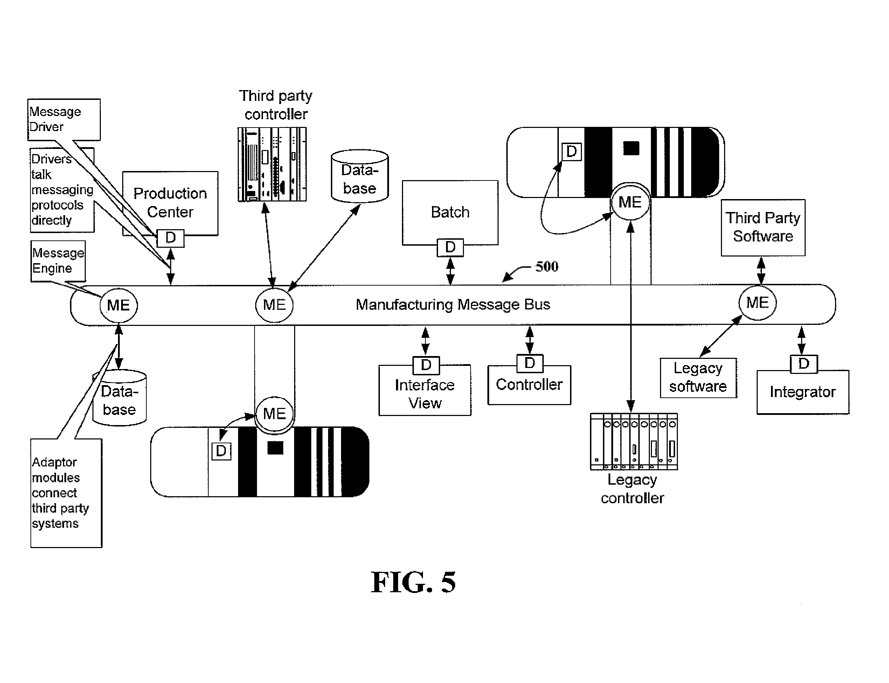

Referring to Fig. 5, an example message bus 500 is illustrated. The message bus 500 is overlay-ed with one possible infrastructure configuration to implement a logical view of a system. In this model 500, applications communicate to systems via message drivers and desired information protocols. Third party systems can be connected to via adaptor modules or protocols in message engines. Multi-hop messages and complex message processing are managed by message engines that communicate with the message bus 500.

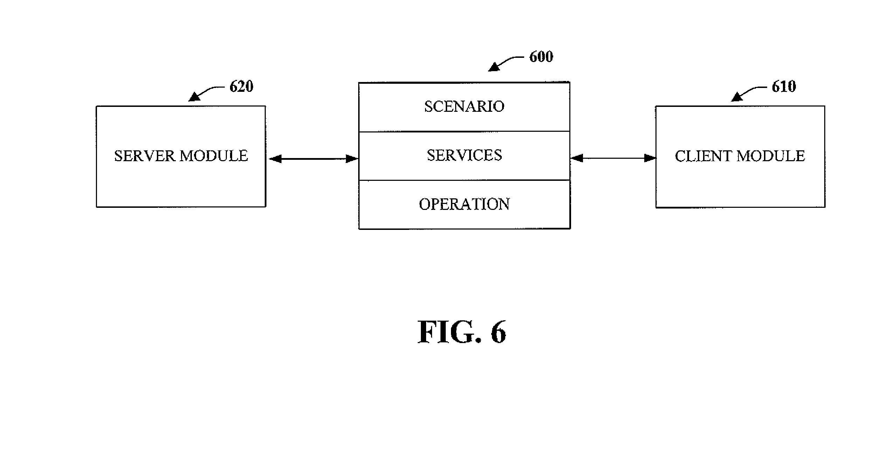

Referring to Fig. 6, a layered communications model 600 is illustrated. Interoperability is provided by the layered communications model 600 which includes scenarios, services and operations. Messaging components provide a model that allows module developers to annotate modules with requirements for access to externally visible components which provide a client view and allow client components 610 to browse. The module identifies its public actions (Commands, Events, Data, Alarms ...) in an interface, where these actions are mapped to operations that enable additional information to be added that describes the connection requirements for the clients.

Services publish these operations on Ports (*e*.*g*., CIP, Live Data, JMS, Web Service ...). Clients 610 are able to discover functionality by browsing these associations in platform directory services. These relationships allow searches on the automation platform such as; Where is this interface deployed? Which ports are the modules interfaces available on? What access roles are required to connect to a server? 620, What messages are exchanged during a connection to this module? What controller chassis or PC server functionality is required to run the service? As can be appreciated, a plurality of similar queries can be generated for a search depending on the module type and or attribute desired.

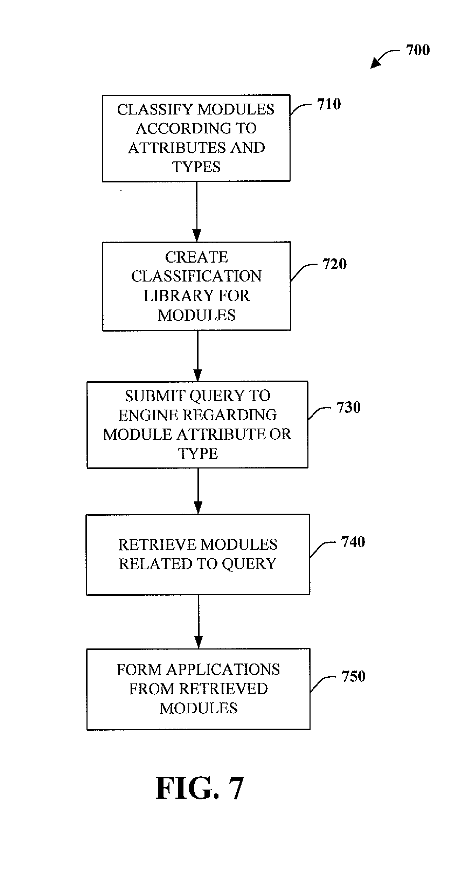

Fig. 7 illustrates a process 700 for module classification and searching. While, for purposes of simplicity of explanation, the methodology is shown and described as a series of acts, it is to be understood and appreciated that the methodology is not limited by the order of acts, as some acts may occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology as described herein.

Proceeding to 710 of Fig. 7, modules are classified according to one or more attributes and or module types. As previously noted, some examples of module types include configuration modules that include definitions and configurations for resources, control modules that facilitate control of resources, and coordination modules that facilitate coordination of resources. Attributes can include resource focus types, activity types, host application types, industry domain types, module properties, message types, configuration types, interface similarities, message processing capabilities, alarm or event interfaces, and so forth. At 720, a classification library can be created if desired. This includes various versions of modules and/or module templates that can be subsequently searched via attribute or type information.

As noted above, searching can also be accommodated outside of a defined library such as conducting an online search of controllers or other components for respective module data. At 730, one or more queries are submitted to a search tool in order to retrieve modules related to the query. At 740, after the query has been submitted, a subset of modules may be retrieved that have some common attribute or type that is related to the query or queries at hand. At 750, one or more applications can be formed from the retrieved modules. These can include user interfaces, monitoring applications, status applications, control applications and so forth that can be formed from the retrieved module subset.

Turning to Fig. 8, example resource control modules 800 are illustrated.
In general, resource control modules 800 provide simple control of one or more resources. The resource control module (RCM) 800 represents the logic to manage the state or data of the resource and may contain other resource control modules to achieve its respective functionality. The RCM 800 provides public interfaces via actions and properties. In some cases, an action may be a simple bit value or a request value that is interfaced to internal values in the module and in other cases more complex logic can be provided. The RCM 800 can include other resource control modules and may promote a command to be represented as segment resource control interface. Example forms of the RCM 800 include:

At 810, an Equipment Control Module (Common name = "Control Module") CM. The simplest form of basic regulatory control of equipment. Encapsulating the equipment and its control such as control of values, drives, and so forth. At 820, a Material Control Module (MCM) can be provided. Management of Material resource instances which are represented as sub-lots including change in location, quality status, availability, order status, logic that can be performed on material sub-lots, generation of material events such as consumed, produced and moved events, sub-lot combination, expiry dates, and so forth.

At 830, a Personnel Control Module (PCM) is provided. This includes management of individual people such as Active, Idle, Break states directly or via shift schedules. This also includes data associated with people such as shift time patterns, for example. Other attributes that may be managed by PCM 830 are a person's location in a plant (GPS), qualification checks, or current assignment, for example. At 840, a Segment Control Module (SCM) includes manipulation of simple segment tasks such as piping paths, AGV paths, device state machines, robotic sequences and so forth. The SCM 840 typically performs an action on one segment such as next step to execute after the current step. At 850, a Storage Control Module (STGCM) includes Manipulation of simple storage logic such as buffer capacity and ordering into and out of a queue for the respective storage unit or requirement.

Before proceeding it is noted that other types of modules are possible than shown. For instance, a configuration module may include management definitions and configuration of resources - personnel, segments, equipment, segments, storage, and so forth. Another type of module includes nested modules where a module references other modules. These modules may be children of a parent module or shared from one module to another. Resource modules may include resource control modules however resource control modules should not include resource modules. Modules can include modules focused on other resource types, for example an equipment module may include equipment modules and material modules.

Fig. 9 illustrates example resource modules 900 for an industrial control system. At 910, an Equipment Module provides coordination of equipment modules and equipment control modules to perform a process orientated task independent of specific material *e.g*., In-feed, AGV controller, Conveyor, and so forth. At 920, a Material Module provides coordination of material modules and material control modules to perform material focused tasks *e.g*., Material reservation, provision, material mass balance calculation, Bill of Material management, Work order management, and so forth. At 930, a Personnel Module provides coordination of personnel modules and personnel control modules to perform personnel focused tasks *e.g*., Electronic signature collection, Security validation, certification validation, Manual control interactions, and so forth.

At 940, a Segment Module provides coordination of segment modules and segment control modules and to execute sequences of tasks represented by segments. Segments define resource requirements and ordering that can represent most production and process activities. This module provides access to more complex tasks that require specific sequences to be followed *e*.*g*., Process Analytics Technology (PAT) integration, electronic signatures collection, defect, process deviation and fault recovery processing. The segment module 940 may also construct a sequence to be followed which can be applied as manual, automatic or semi automatic sequences (*e.g*., Route, recipe execution)

At 950, a Storage Module provides coordination of storage related activities, allocation of storage to requestors, modeling of inventory calculations and so forth. This also includes interaction with higher-level systems that manage storage and inventory information.

Figs. 10-13 illustrate aspects of a common data model noted above. Now turning to Fig. 10, hierarchical representations that can be employed in connection with a schema employed by programmable logic controllers to facilitate use of a hierarchically structured data model are illustrated. The hierarchies illustrated in this figure relate to equipment hierarchies, which can be integrated with procedure hierarchies to generate a robust representation of a plant (which is incorporated within a schema for use in connection with industrial controllers). A first hierarchy 1000 illustrates a representation of equipment within a plant given disparate processes. For instance, a hierarchy in accordance with a batch process can include a representation of an enterprise, site, area, process cell, unit, equipment module, and control module.

In contrast, a hierarchical representation of equipment within a continuous process can include representations of an enterprise, site, area, production unit, continuous unit, equipment module, and control module. In still more detail, an enterprise can represent an entirety of a company, a site can represent a particular plant, an area can represent a portion of the plant, a process cell can include equipment utilized to complete a process, a unit can relate to a unit of machinery within the process cell, an equipment module can include a logical representation of portions of the process cell, and the control module can include basic elements, such as motors, valves, and the like. Furthermore, equipment modules can include equipment modules and control modules can include control modules. Thus, as can be discerned from the figure, four disparate hierarchical representations can be employed to represent equipment within batch processes, continuous processes, discrete processes, and inventory.

A second hierarchy 1002 can be utilized that represents each of the aforementioned hierarchical representations. The hierarchy 1002 can include representations of an enterprise, a site, an area, a work center, a work unit, an equipment module, and a control module. Thus, a common representation can be generated that adequately represents the hierarchy 1000. For purposes of consistent terminology, data objects can be associated with metadata indicating which type of process they are associated with. Therefore, data objects can be provided to an operator in a form that is consistent with normal usage within such process. For example, batch operators can utilize different terminology than a continuous process operator (as shown by the hierarchy 1000).

Metadata can be employed to enable display of such data in accordance with known, conventional usage of such data. Thus, implementation of a schema in accordance with the hierarchy 1002 will be seamless to operators. Furthermore, in another example, only a portion of such representation can be utilized in a schema that is utilized by a controller. For instance, it may be desirable to house equipment modules and control modules within a controller. In another example, it may be desirable to include data objects representative of work centers and work units within a controller (but not equipment modules or control modules). The claimed subject matter is intended to encompass all such deviations of utilizing the hierarchy 1002 (or similar hierarchy) within a controller.

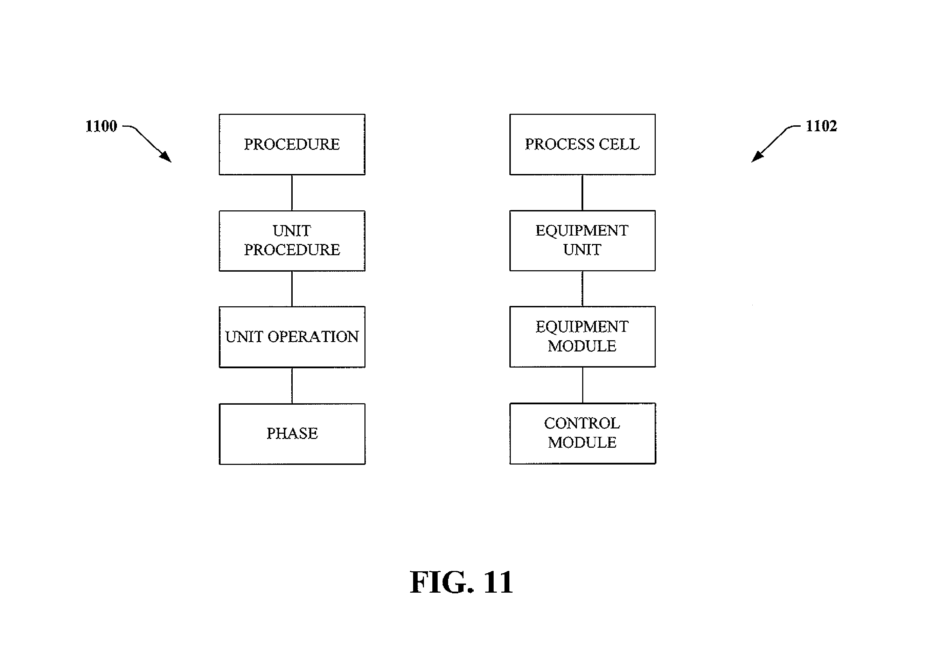

Referring to Fig. 11, standard hierarchies that can be utilized to represent procedures and equipment are illustrated. In particular, a hierarchy 1100 represents procedures that can exist within a batch process. For instance, a procedure can relate to a high-level procedure, such as creation of a pharmaceutical drug. A unit procedure can be more specific, such as adding particular chemicals to a mix by way of a particular unit. A unit operation can be still more specific, and a phase can be yet more specific (relating to operation of low-level machines). For instance, a phase can relate to various states which can exist with respect to low-level equipment, such as stopping, starting, pausing a motor, opening and closing a valve, and the like. A hierarchy 1102 relating to a representation of equipment in, for example, a batch process is displayed adjacent to the hierarchy 1100.

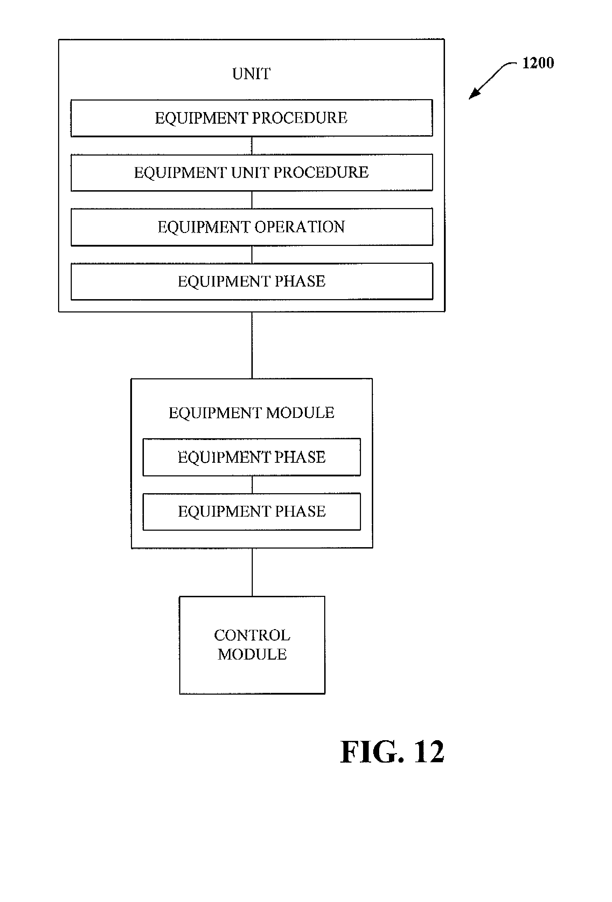

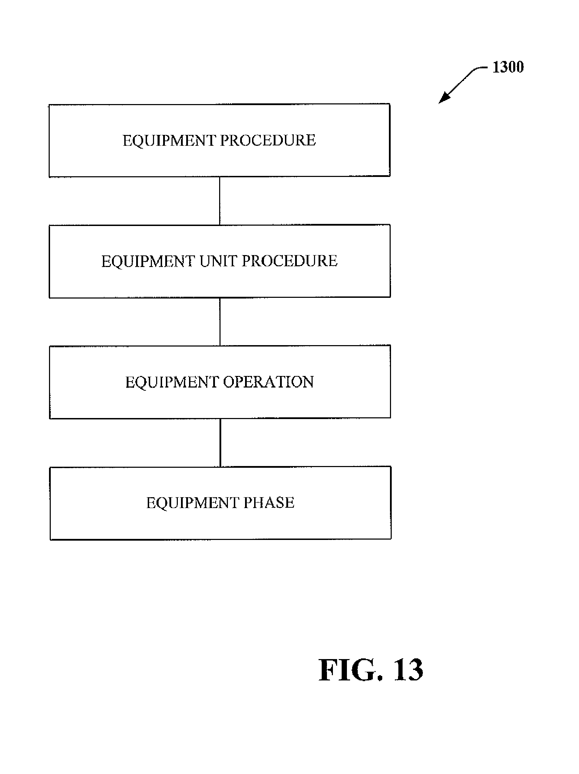

Turning to Fig. 12, a hierarchy 1200 that represents one possible integration of the example hierarchies 1100 and 1102 (Fig. 11). A unit (such as a work unit described in Fig. 10) can be associated with an equipment procedure, an equipment unit procedure, an equipment operation, and an equipment phase). Thus, the procedures, operation, and phase can be associated with a particular work unit. An equipment module can be associated with one or more equipment phases, and can be above a control module in the hierarchy. Referring Briefly to Fig. 13, a hierarchy 1300 that can be utilized in connection with equipment control is illustrated. The hierarchy is substantially similar to that described within the unit portion of the equipment unit. As stated above, the hierarchies illustrated in Figs. 10-13 can be based upon a standard, such as ISA 88, ISA 95, or other standard. Any suitable representation that can be utilized to model an entirety of a plant, however, is contemplated. Further, the representations shown in these figures can be directly implemented into a controller. For instance, data objects in accordance with any portion of the hierarchies described in Figs. 10-13 can be existent within a controller, together with state machines that enable creation of such objects.

It is noted that the above modules can be processed on various types of computing devices and resources, where some of these devices may be associated with an industrial control component and other devices associated with standalone or networked computing devices. Thus, computers can be provided to execute the above modules or associated data that include a processing unit, a system memory, and a system bus, for example. The system bus couples system components including, but not limited to, the system memory to the processing unit that can be any of various available processors. Dual microprocessors and other multiprocessor architectures also can be employed as the processing unit.

The system bus can be any of several types of bus structure(s) including the memory bus or memory controller, a peripheral bus or external bus, and/or a local bus using any variety of available bus architectures including, but not limited to, 11-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory includes volatile memory and nonvolatile memory. The basic input/output system (BIOS), containing the basic routines to transfer information between elements within the computer, such as during start-up, is stored in nonvolatile memory. By way of illustration, and not limitation, nonvolatile memory can include read only memory (ROM), programmable ROM (PROM), electrically programmable ROM (EPROM), electrically erasable ROM (EEPROM), or flash memory. Volatile memory includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). Computing devices also includes removable/non-removable, volatile/non-volatile computer storage media.

It is to be appreciated that software components can be provided that act as an intermediary between users and the basic computer resources described in suitable operating environment. Such software includes an operating system which can be stored on disk storage, acts to control and allocate resources of the computer system. System applications take advantage of the management of resources by operating system through program modules and program data stored either in system memory or on disk storage. It is to be appreciated that the present invention can be implemented with various operating systems or combinations of operating systems or shared with control systems.

Computers can operate in a networked environment using logical connections to one or more remote computers, such as remote computer(s). The remote computer(s) can be a personal computer, a server, a router, a network PC, a workstation, a microprocessor based appliance, a peer device or other common network node and the like, and typically includes many or all of the elements described relative to computer. Remote computers can be logically connected through a network interface and then physically connected *via* communication connection. Network interfaces encompass communication networks such as local-area networks (LAN) and wide-area networks (WAN). LAN technologies include Fiber Distributed Data Interface (FDDI), Copper Distributed Data Interface (CDDI), Ethernet/IEEE 1102.3, Token Ring/IEEE 1102.5 and the like. WAN technologies include, but are not limited to, point-to-point links, circuit switching networks like Integrated Services Digital Networks (ISDN) and variations thereon, packet switching networks, and Digital Subscriber Lines (DSL), and wireless networks.

The systems described above employing the authentication protocols can include one or more client(s). The client(s) can be hardware and/or software (*e.g*., threads, processes, computing/control devices). The systems can also include one or more server(s). The server(s) can also be hardware and/or software (e.g., threads, processes, computing/control devices). The servers can house threads to perform transformations by employing the authentication protocol, for example. One possible communication between a client and a server may be in the form of a data packet adapted to be transmitted between two or more computer processes.

What has been described above includes various exemplary aspects. It is, of course, not possible to describe every conceivable combination of components or methodologies for purposes of describing these aspects, but one of ordinary skill in the art may recognize that many further combinations and permutations are possible. Accordingly, the aspects described herein are intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

In summary of the invention. A search component for an industrial automation system is provided. The search component includes one or more modules that employ resources and logic to expose functionality of the modules while providing generic interfaces to external components of the modules. A classification component assigns attributes to the modules to facilitate a search of the modules.

## Claims

1. A search component for an industrial automation system, comprising:
one or more modules that employ resources and logic to expose functionality of the modules while providing generic interfaces to external components of the modules; and
a classification component to assign attributes to the modules to facilitate a search of the modules.

2. The system of claim 1, further comprising a search engine that employs the attributes to determine a subset for the modules.

3. The system of claim 1 or 2, the attributes include at least one of a primary resource focus type, an activity type, a host application type, and an industry domain type.

4. The system of claim 1, 2 or 3 further comprising a library of modules to be searched.

5. The system of one of claims 1 to 4, further comprising a component that forms a subsequent application from a retrieved subset of modules.

6. The system of claim 5, the application includes a user interface, a monitoring application, a control application, a quality application, and a management application.

7. The system of one of claims 1 to 6, further comprising a search engine that performs online searches of modules from operational system components or performs offline searches from a module library.

8. The system of one of claims 1 to 7, the classification component is associated with at least three module types including a configuration module, a control module, and a coordination module.

9. A method to facilitate module searching in an industrial controller system, comprising:
defining resources and logic for a module;
determining at least one attribute or type for the module; and
executing a search over a plurality of modules to determine a module subset based at least in part on the attribute or type for the module.

10. The method of claim 9, further comprising classifying one or more modules in a library.
